(19) Europäisches Patentamt

European Patent Office

Office européen des brevets

(11) **EP 2 088 838 B1**

(12) **EUROPEAN PATENT SPECIFICATION**

(45) Date of publication and mention
of the grant of the patent:
**18.09.2013 Bulletin 2013/38**

(51) Int Cl.:
**H05H 1/24** (2006.01)

(21) Application number: **09250258.2**

(22) Date of filing: **30.01.2009**

(54) **Plasma reactor**

Plasmareaktor

Réacteur à plasma

(84) Designated Contracting States:
**DE FR GB**

(30) Priority: **05.02.2008 JP 2008025293**

(43) Date of publication of application:
**12.08.2009 Bulletin 2009/33**

(73) Proprietor: **NGK Insulators, Ltd.**
**Nagoya-shi, Aichi 467-8530 (JP)**

(72) Inventors:
• **Masuda, Masaaki**
**c/o Legal Affairs and Intellectual Property Dept.**
**NGK Insulators, Ltd.**
**Nagoya City, Aichi-ken 467-8530 (JP)**
• **Mizuno, Hiroshi**
**c/o Legal Affairs and Intellectual Property Dept.**
**NGK Insulators, Ltd.**
**Nagaoya City, Aichi-ken 467-8530 (JP)**

• **Takahashi, Michio**
**c/o Legal Affairs and Intellectual Property Dept.**
**NGK Insulators, Ltd.**
**Nagoya City, Aichi-ken 467-8530 (JP)**
• **Sekiya, Takayuki**
**c/o Legal Affairs and Intellectual Property Dept.**
**NGK Insulators, Ltd.**
**Nagoya City, Aichi-ken 467-8530 (JP)**

(74) Representative: **Paget, Hugh Charles Edward et al**
**Mewburn Ellis LLP**
**33 Gutter Lane**
**London**
**EC2V 8AS (GB)**

(56) References cited:
**EP-A1- 1 508 677     EP-A1- 1 645 730**
**EP-A1- 1 809 082     US-A1- 2004 141 890**
**US-A1- 2005 174 062     US-A1- 2005 214 181**

**Description**

BACKGROUND OF THE INVENTION

Field of the Invention
The present invention relates to a plasma reactor that reforms fuel utilizing a plasma discharge (low-temperature plasma) to produce hydrogen.
Description of Related Art
A large amount of hydrogen has been used as a petrochemical basic raw material gas. In recent years, hydrogen has attracted attention as a clean energy source in the field of fuel cells and the like. Therefore, use of hydrogen is expected to expand in the future. Hydrogen used for such purposes is produced by utilizing a reforming reaction (e.g., steam reforming reaction or partial reforming reaction) using a hydrocarbon compound (e.g., methane, butane, kerosene, gasoline, or diesel oil) or an alcohol (e.g., methanol or ethanol) as the main fuel (raw material gas).
A reformer utilizing a catalyst that promotes a reforming reaction has been mainly used to produce hydrogen. However, since a temperature as high as 700 to 900°C is generally necessary to reform a hydrocarbon, the size of the reformer must be increased. Moreover, a long startup time and a large amount of startup energy are required, for example. In recent years, a plasma reactor that generates low-temperature plasma by applying a direct-current voltage or a pulse voltage between electrodes to reform a fuel that flows between the electrodes has been developed.
A plasma reactor utilizing low-temperature plasma has an advantage in that the process temperature can be decreased since the gas temperature is approximately equal to room temperature (electron temperature is several hundred degrees Kelvin (K)) so that the size and cost of the reactor can be reduced. On the other hand, such a plasma reactor lacks reaction selectivity and has low energy efficiency.
In order to deal with such a problem, optimization of the reactor structure has  been studied. At present, a parallel- plate structure in which a tabular anode and a tabular cathode are disposed in parallel is generally used (see JP- A- 2001- 314748 and JP- A- 2005- 247638) . A plasma reactor having such a structure reforms fuel by utilizing at least one type of plasma discharge selected from arc discharge, glow discharge, barrier discharge, corona discharge, pulsed streamer discharge, creeping discharge, and the like that occurs between a pair of parallel tabular electrodes. However, the reforming efficiency and the amount of hydrogen produced by reforming are not necessarily sufficient as compared with reforming using a catalyst. In particular, the gas reforming rate decreases to a large extent when increasing the flow rate of the raw material gas so that the amount of hydrogen produced by reforming decreases to a large extent.
When using a plasma reactor having a parallel-plate structure, it is necessary to discharge plasma under high vacuum or while mixing a rare gas in order to increase the plasma discharge gap. A plasma reactor having a parallel-plate structure also has a disadvantage in that a pulse having a large pulse width must be applied between the anode and the cathode since the capacitance between the anode and the cathode is large. Moreover, since it is necessary to charge the entire dielectrics in which the anode and the cathode are respectively embedded, the amount of energy required to implement uniform plasma discharge increases. This results in an increase in heat loss.
US2004/0141890 describes exhaust gas purifying apparatus, for trapping and burning PM, which comprises electrodes and an insulative honeycomb structure. In some structures illustrated, the electrodes are applied to the side faces of the honeycomb structure, parallel to the direction of gas flow through the honeycomb structure, and create an electric field in the honeycomb structure which causes PM to deposit on the side walls of the cell passages of the honeycomb structure by Coulomb force. Additionally, needle electrodes are shown upstream of the honeycomb structure, to generate corona discharge.
US2005/0214181 shows plasma generators for producing plasma, in which electrodes sandwich honeycomb structures, through which the gas passes. In some structures shown, the electrodes are all parallel to the direction of gas flow, and in other structures the electrodes are all perpendicular to the direction of gas flow.

SUMMARY OF THE INVENTION

The present invention was completed in view of the above-described situation. An object of the present invention is to provide a plasma reactor having a novel structure that can be used at a low temperature as compared with a plasma reactor having a parallel-plate structure, can be operated at normal pressure, and can efficiently produce a hydrogen-containing reformed gas in a higher yield.
According to the present invention, the above object is achieved by the  following plasma reactor.
[1] A plasma reactor as set out in claim 1.
[2] The plasma reactor according to [1] , wherein the honeycomb structure is a catalyst- supporting honeycomb structure that supports a catalyst component.
[3] The plasma reactor according to [2] , wherein the catalyst component is at least one element selected from the group consisting of a noble metal, aluminum, nickel, zirconium, titanium, cerium, cobalt, manganese, zinc, copper, tin, iron, niobium, magnesium, lanthanum, samarium, bismuth, and barium.

[4] The plasma reactor according to [3] , wherein the noble metal is at least one element selected from the group consisting of platinum, rhodium, palladium, ruthenium, indium, silver, and gold.

[5] The plasma reactor according to any one of [1] to [4] , wherein the honeycomb structure has a cell density of 4 to 186 cells/cm$^2$.

[6] The plasma reactor according to any one of [1] to [5] , wherein the set of plural second electrodes are divided into two or more groups, the pulse power supply includes two or more power supply circuits, and each of the plural second electrodes is connected to a corresponding power supply circuit among the two or more power supply circuits so that electrical pulses can be applied to the plural second electrodes at different timings corresponding to the two or more groups.

[7] The plasma reactor according to any one of [1] to [6] , wherein a voltage waveform supplied from the pulse power supply is selected from the group consisting of a pulse waveform having a peak voltage of 1 kV or more and a pulse number per second of one or more, an alternating- current voltage waveform having a peak voltage of 1 kV  or more and a frequency of 1 kHz or more, a direct- current waveform having a voltage of 1 kV or more, and a voltage waveform formed by superimposing two or more of these waveforms.

[8] The plasma reactor according to any one of [1] to [7] , wherein each of the first electrode and the plural second electrodes includes a substrate formed of an insulating ceramic and a metal electrode buried in the substrate.

According to the present invention, since the second tabular electrodes are disposed in parallel at given intervals perpendicularly to the first electrode, sandwiching a honeycomb structure there between, instead of disposing a tabular anode and a tabular cathode in parallel, electric field concentration can be increased. As a result, the reforming efficiency is improved so that a sufficient amount of hydrogen can be produced by fuel reforming even at a low temperature and normal pressure. In particular, since the arrangement interval between the second electrodes can be reduced by increasing the insulating properties of the second electrodes, a large number of radicals can be produced by plasma. Therefore, a higher reforming efficiency can be achieved. When the second electrodes are divided into a plurality of groups and the adjacent electrodes are connected to different power supply circuits so that electrical pulses can be applied at different timings, the arrangement interval between the second electrodes can be further reduced. Therefore, a larger number of radicals can be produced. Since the honeycomb structure is disposed between the first electrode and the second electrode, the catalyst component can be supported on the honeycomb structure. Therefore, since a combined reaction due to a plasma discharge and the catalyst occurs, the reforming efficiency is further improved. Moreover, production of by-products due to the reforming reaction is suppressed so that a high hydrogen production rate can be achieved.

BRIEF DESCRIPTION OF THE DRAWINGS

FIG. 1 is a schematic view showing an example of one embodiment of a plasma reactor according to the present invention.

FIG. 2 is a schematic view showing an example of the arrangement of electrodes and a honeycomb structure that form a plasma reactor according to the present invention.

FIG. 3 is a schematic view showing another example of the arrangement of electrodes and a honeycomb structure that form a plasma reactor according to the present invention.

FIG 4 is a timing diagram showing a first electrical pulse (left side) applied between a first electrode and a first-group second electrode and a second electrical pulse (right side) applied between the first electrode and a second-group second electrode.

FIG 5 is a schematic plan view showing an example of the structure of a first electrode.

FIG. 6 is a schematic plan view showing an example of the structure of a second electrode.

FIG. 7 is a schematic plan view showing another example of the structure of a second electrode.

FIG. 8 is a schematic plan view showing a further example of the structure of a second electrode.

DESCRIPTION OF PREFERRED EMBODIMENTS

The present invention is described below with reference to specific embodiments. Note that the present invention should not be construed as being limited to the following embodiments.

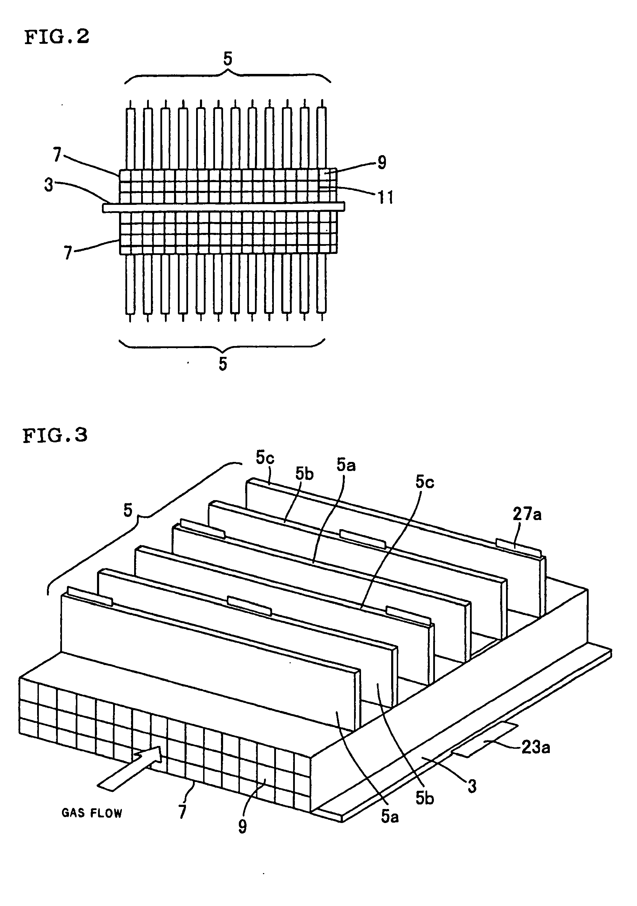

FIG. 2 is a schematic view showing an illustrative example of the arrangement of  first and second electrodes and two honeycomb structures that form a plasma reactor according to the present invention. The plasma reactor according to the present invention includes, however, as a basic construction, a first tabular electrode 3 and one set of plural second tabular electrodes 5 being disposed in parallel at given intervals perpendicularly to the first tabular electrode as electrodes for generating plasma, with sandwiching the honeycomb structure there between. That is, the present plasma reactor comprises, as a basic structure, at least one honeycomb structure, a first tabular electrode, at least one set of plural second tabular electrodes being disposed in parallel at given intervals perpendicularly to the first electrode sandwiching a honeycomb structure there between a honeycomb structure, and a pulse power supply that applies an electrical pulse between the first electrode and each of the plural second electrodes. In case of the reactor shown in FIG 2, the reactor comprises one first tabular electrode 3 and two sets of plural second tabular electrodes 5, each of which faces other set of plural second tabular electrodes each other, with sandwiching the first tabular electrode and the honeycomb structures there between; said honeycomb structures also facing each other, with sandwiching the first tabular electrode there between. Since a plasma discharge occurs between the first electrode 3 and each of the second electrodes 5 by disposing the second electrodes 5 perpendicularly to the first electrode 3 instead of disposing the second electrodes 5 in parallel with the first electrode 3, uniform plasma discharge occurs over the entire area between the first electrode 3 and the second electrodes 5 at low energy. Therefore, an efficient reforming process can be performed at a low temperature as compared with a plasma reactor having a parallel-plate structure. Moreover, the plasma reactor according to the present invention can be used at normal pressure. Note that the present plasma reactor may comprise one honeycomb structure, and a first electrode and one set of plural second electrodes facing each other sandwiching the honeycomb structure there between, while this embodiment is not depicted, though.

In the plasma reactor according to the present invention, at least one honeycomb structure 7 is disposed between the first electrode 3 and the second electrodes 5. A reforming target fuel (raw material gas) is introduced into cells 9 of the honeycomb structure 7, and a plasma-discharge reforming reaction occurs in the cells 9. When disposing the honeycomb structure 7 between the first and second electrodes for causing a plasma discharge, a catalyst that promotes a reforming reaction can be supported on the honeycomb structures 7. As a result, a combined reaction due to a plasma discharge and the catalyst occurs. This further improves the reforming efficiency. The honeycomb structure 7 has a plurality of cells 9 partitioned by a partition wall 11, and the cells 9 serve as passages for the raw material gas. Therefore, the contact area with the raw material gas increases. As a result, a high reforming efficiency can be achieved as compared with the case where an identical amount of catalyst is supported on the surface of an electrode of a plasma reactor having a parallel-plate structure, for example.

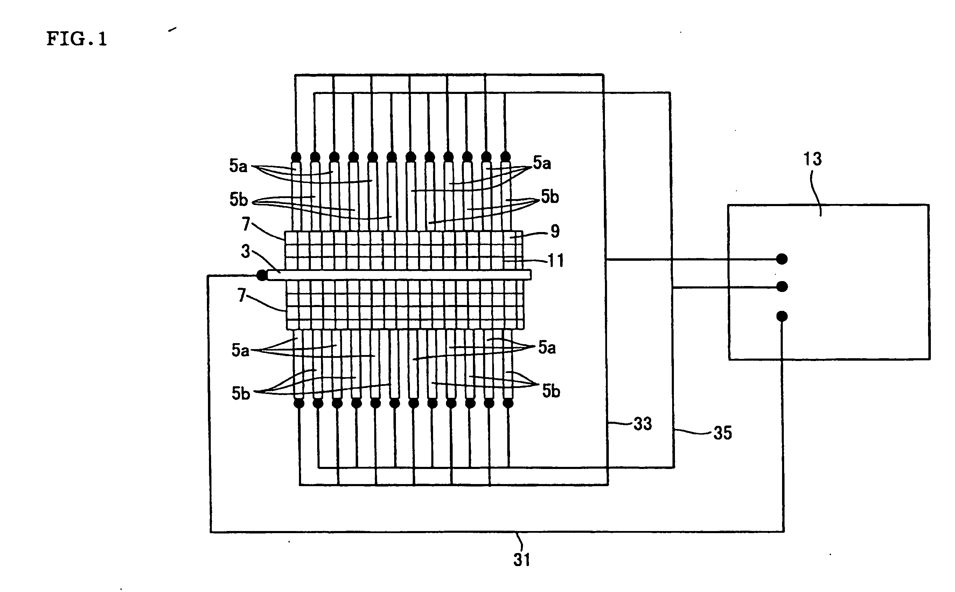

FIG. 1 is a schematic view showing an example of one embodiment of the plasma reactor according to the present invention. In this example, plural second tabular electrodes are divided into two groups. The second electrodes that belong to one of the two groups are referred to as first-group second electrodes 5a, and the second electrodes that belong to the other group are referred to as second-group second electrodes 5b. Six first-group second electrodes 5a and six second-group second electrodes 5b are disposed in parallel on one of side faces of the honeycomb structures 7 (i.e., the left side and the right side of the first electrode 3) at given intervals. The first-group second electrodes 5a and the second-group second electrodes 5b are alternately disposed at the same spatial frequency at positions shifted by a half cycle. The first electrode 3, the first-group second electrodes 5a, and the second-group second electrodes 5b are connected to a pulse power supply 13 through lines 31, 33, and 35, respectively.

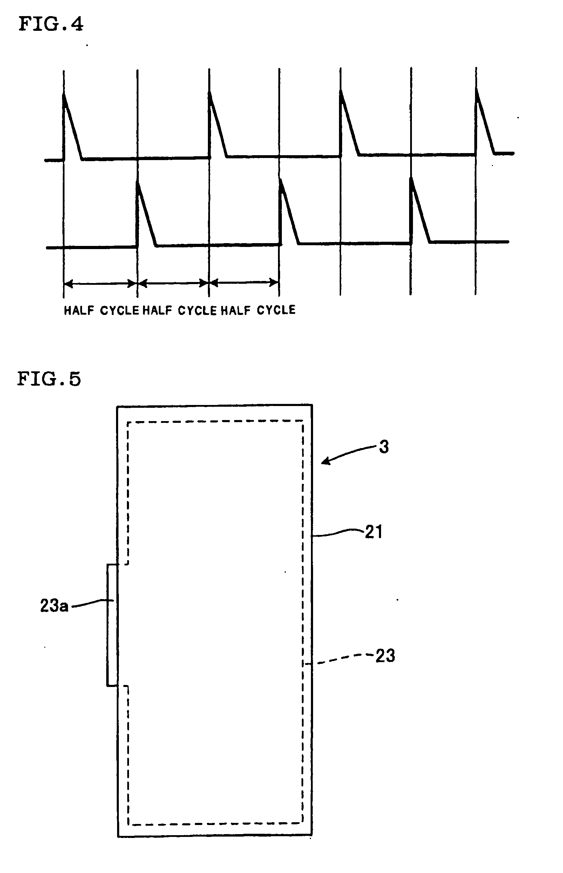

The pulse power supply 13 used in this example includes two power supply circuits. The first-group second electrode 5a and the second-group second electrode 5b are connected to different power supply circuits so that electrical pulses can be applied to the first-group second electrode 5a and the second-group second electrode 5b at different timings. FIG. 4 is a timing diagram showing a first electrical pulse (left side) applied between the first electrode 3 and the first-group second electrode 5a and a second electrical pulse (right side) applied between the first electrode 3 and the second-group second electrode 5b. In this example, the first electrical pulse and the second electrical pulse have the same repetition frequency and differ in phase by a half cycle. The plasma reactor according to the present invention achieves an improved reforming efficiency by thus shifting the phases of the first electrical pulse and the second electrical pulse (refer to the examples described later).

In this example, six first-group second electrodes 5a and six second-group second electrodes 5b are disposed on each side (left side and right side) of the first electrode 3. Note that the number of second electrodes is not limited thereto. The number of second electrodes may be increased or decreased while maintaining the topology in which the first-group second electrodes 5a and the second-group second electrodes 5b are alternately disposed at positions shifted by a half cycle. The pulse power supply 13 may include three or more power supply circuits so that electrical pulses can be applied to the corresponding second electrodes at different timings. The phases of the first electrical pulse and the second electrical pulse may not be shifted by a half cycle. An identical electrical pulse may be applied to all of the second electrodes. In this case, the second electrodes need not be divided into a plurality of groups, and the pulse power supply need not include a plurality of power supply circuits. The interval between the second electrodes may be appropriately selected corresponding to the plasma process. The interval between the second electrodes is preferably 1 to 10 mm, and more preferably 0.5 to 5 mm. The second electrode preferably has a knife shape of which the end area that comes in contact with the honeycomb structure is formed to be thinner than the remaining area.

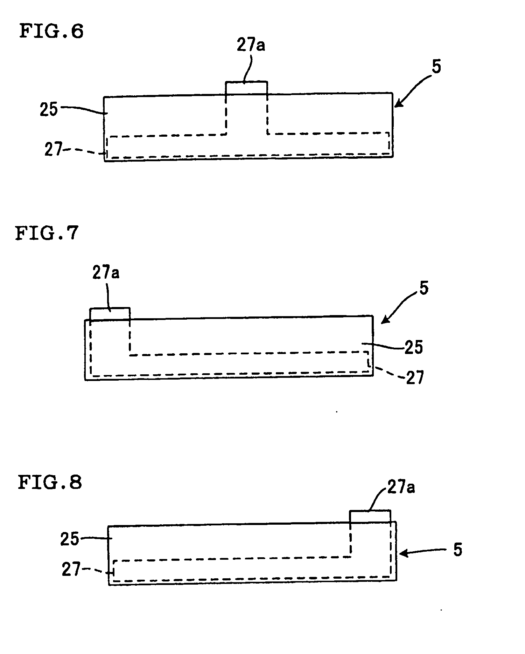

Each of the first electrode and the second electrodes used in the present invention preferably includes a tabular substrate and a metal electrode that is embedded in or printed on the substrate. FIG 5 is a schematic plan view showing an example of the structure of the first electrode 3. A metal electrode 23 having an area smaller to some extent than the area of a tabular substrate 21 is embedded in the substrate 21. The metal electrode 23 partially protrudes from the substrate 21 as a connection section 23a connected to a line. FIG. 6 is a schematic plan view showing an example of the structure of a second electrode 5. A metal electrode 27 having almost the same length as that of a tabular substrate 25 is embedded in the substrate 25. The metal electrode 27 partially protrudes from the substrate 25 as a connection section 27a connected to a line. When dividing the second electrodes into a plurality of groups, the second electrodes belonging to different groups are preferably formed by changing the position of the connection section 27a (see FIGS. 7 and 8) so that the insulation distance between the second electrodes belonging to different groups is provided sufficiently and the lines do not interfere with each other.

The substrate is preferably formed of a ceramic sintered body. The term "ceramic sintered body" used herein refers to a sintered body obtained by sintering a firing target product such as a ceramic formed product, degreased product, or calcined product. As the ceramic, an insulating ceramic such as alumina, zirconia, silica, mullite, spinel, cordierite, aluminum nitride, silicon nitride, a titanium-barium oxide, a barium-titanium-zinc oxide, or a glass ceramic is preferably used.

A method of producing the substrate is not particularly limited. For example, the substrate may be produced by a green sheet lamination method. Specifically, the substrate may be produced by press-forming a ceramic powder so that a metal sheet or metal foil that forms the metal electrode is buried in the ceramic powder, and sintering the resulting product. A highly conductive metal is preferable as the metal used for the metal electrode. For example, a metal or an alloy containing at least one component selected from the group consisting of iron, gold, silver, copper, titanium, aluminum, nickel, chromium, tungsten, and molybdenum is preferably used.

The metal electrode may also be formed by applying a paste to a ceramic green sheet. In this case, an arbitrary coating method such as screen printing, calendar roll printing, dipping, deposition, or physical vapor deposition may be used. When forming the metal electrode by the coating method, a powder of the above-mentioned metal or alloy is mixed with an organic binder and a solvent (e.g., terpineol) to prepare a conductive paste, and the conductive paste is applied to a ceramic green sheet. The ceramic green sheet may be formed by an arbitrary method. For example, a doctor blade method, a calendar method, a printing method, a roll coating method, a plating method, or the like may be used.

As the green sheet raw material powder, a powder of the above-mentioned ceramic, a glass powder, or the like may be used. In this case, silicon oxide, calcia, titania, magnesia, zirconia, or the like may be used as a sintering aid. The sintering aid is preferably added in an amount of 3 to 10 parts by mass based on 100 parts by mass of the ceramic powder. A dispersant, a plasticizer, and an organic solvent may be added to the ceramic slurry.

The substrate may also be produced by powder press forming. A sintered body in which a metal electrode is buried may be obtained by hot pressing by utilizing a mesh metal or metal foil as the metal electrode. A substrate formed product may be produced by extrusion forming by appropriately selecting a forming aid. A metal electrode may be formed on the surface of the extruded product by appropriately selecting a solvent and printing a metal paste (conductive film component).

The honeycomb structure used in the present invention is formed of an insulating material. The honeycomb structure is preferably formed of a ceramic. As the ceramic, alumina, zirconia, silicon nitride, aluminum nitride, Sialon, mullite, silica, cordierite, or the like may be suitably used. These materials may be used either individually or in combination.

In the present invention, the cell density (i.e., the number of through channels (cells) per unit cross- sectional area) of the honeycomb structure is not particularly limited. If the cell density is too low, the strength of the partition wall, the strength of the honeycomb structure, and the effective geometric surface area (GSA) decrease. If the cell density is too high, a pressure loss when a reforming target gas flows increases. It is preferable to set the cell density at 6 to 2000 cells/in$^2$ (1.0 to 320 cells/cm$^2$) taking the balance among the strength, effective GSA, pressure loss, and the like into consideration. For example, when producing hydrogen by reforming a hydrocarbon, the cell density is preferably set at 25 to 1163 cells/in$^2$ (4 to 186 cells/cm$^2$) . If the cell density is less than 25 cells/in$^2$ (4 cells/cm$^2$) , the creeping discharge plasma generation area becomes scattered on the surface of the partition wall of each cell. As a result, the gas reforming efficiency may decrease. If the cell density exceeds 1163 cells/in$^2$ (186 cells/cm$^2$) , the back pressure resistance of the honeycomb structure may increase.

A catalyst component may be supported on the honeycomb structure by mixing a powder of a heat-resistant inorganic oxide having a large specific surface area (e.g., alumina powder) with a solution containing a catalyst component, drying and firing the resulting product to obtain a powder containing the catalyst component, adding an alumina sol, water, and the like to the powder to prepare a slurry, immersing the honeycomb structure in the slurry (i.e., coated with the slurry), and drying and firing the resulting product, for example. At least one element selected from the group consisting of a noble metal (i.e., platinum, rhodium, palladium, ruthenium, indium, silver, and gold), aluminum, nickel, zirconium, titanium, cerium, cobalt, manganese, zinc, copper, tin, iron, niobium, magnesium, lanthanum, samarium, bismuth, and barium is preferably supported on the honeycomb structure as the catalyst component. These elements may be supported on the honeycomb structure as an oxide or a compound other than an oxide.

As the pulse power supply used in the present invention, it is preferable to use a high-voltage pulse power supply that includes an inductive energy storage power supply circuit (IES circuit) that utilizes a static induction thyristor (SI thyristor). For example, when dividing the second electrodes into two groups and applying electrical pulses that differ in phase to the second electrodes belonging to the two groups (refer to the above embodiment), it is preferable to use a two-series IES circuit that utilizes two SI thyristors in order to implement high-speed switching. The two-series IES circuit causes the two SI thyristors to be turned OFF using a closing switch function and an opening switch function to generate a high voltage between the gate and the anode of each of the SI thyristors. The details of the IES circuit that forms the basis for the two-series IES circuit are described in "Inductive Energy Storage Pulse Power Supply", Katsuji Iida and Takeshi Sakuma, 15th SI Device Symposium (2002).

Regarding the plasma voltage waveform employed when reforming a raw material gas using the plasma reactor according to the present invention, the voltage waveform supplied from the pulse power supply is preferably a pulse waveform having a peak voltage of 1 kV or more and a pulse number per second of one or more, an alternating- current voltage waveform having a peak voltage of 1 kV or more and a frequency of 1 kHz or more, a direct- current waveform having a voltage of 1 kV or more, or a voltage waveform formed by superimposing two or more of these waveforms. The peak voltage is preferably 1 to 20 kV, and more preferably 5 to 10 kV The pulse width (half- width) is preferably about 50 to 300 ns.

In the embodiment shown in FIGS. 1 and 2, the second electrode 5 is disposed so that the longitudinal direction of the second electrode 5 is parallel to the axial direction of the cell 9 of the honeycomb structure 7 (raw material gas flow direction). Note that the arrangement direction employed in the present invention is not limited thereto. For example, FIG 3 shows an example in which the second electrode 5 is disposed so that the longitudinal direction of the second electrode 5 is perpendicular to the axial direction of the cell 9 of the honeycomb structure 7. In this case, a plasma field is easily spread in the gas flow direction.

In the example shown in FIG 3, the second electrodes 5 are divided into three groups (i.e., first-group second electrodes 5a, second-group second electrodes 5b, and third-group second electrodes 5c), and are disposed cyclically so that the connection sections 27a connected to the lines are provided at different position corresponding to each group. The distance between the second electrodes is preferably greater than the distance between the first electrode 3 and the second electrode 5 that corresponds to the thickness of the honeycomb structure 7 by a factor of 1.5 to 2.0. If the above factor is less than 1.5, interference and concentration of an electric field occur to a large extent. As a result, uniform plasma may not be generated in the honeycomb structure 7. If the above factor is more than 2.0, the plasma spaces generated between the electrodes may be superimposed to only a small extent. This may decrease the raw material gas reforming efficiency.

In the example shown in FIG. 3, the end of the second electrode 5 that comes in contact with the honeycomb structure 7 is linearly formed along the longitudinal direction of the second electrode 5. In order to reduce interference and concentration of an electric field generated between the electrodes and generate plasma more efficiently, it is preferable to form an elevation/depression shape on the end of the second electrode along the longitudinal direction of the second electrode 5. When forming the elevation/depression shape by machining, the elevation/depression shape must be formed so that the metal electrode is not exposed by machining. It is preferable to form the elevation/depression shape so that its position differs between the adjacent second electrodes. In this case, it is preferable that the position of the elevation/depression shape changes cyclically in the arrangement direction of the second electrodes. The width and the depth of the elevation/depression shape are preferably 0.5 times to twice the width of one cell of the honeycomb structure. If the width and the depth of the elevation/depression shape are larger than a value twice the width of one cell of the honeycomb structure, uniform plasma may not be generated in the honeycomb structure.

The plasma reactor according to the present invention is normally used in a state in which the first electrode, the second electrodes, and the honeycomb structure(s) are placed in a chamber (reactor) of which the inside is insulated. A ceramic is preferable as an insulating material used to insulate the inside of the chamber. Specifically, alumina, zirconia, silicon nitride, aluminum nitride, Sialon, mullite, silica, cordierite, or the like may be suitably used. These materials may be used either individually or in combination. A supply pipe for introducing fuel (raw material gas) or the like into the chamber from the outside and an exhaust pipe for discharging a reformed gas to the outside to recover the gas are connected to the chamber.

When producing hydrogen using the plasma reactor according to the present invention, the reforming target fuel is not particularly limited insofar as the reforming target fuel can produce a hydrogen-containing gas. For example, a hydrocarbon compound (e.g., a light hydrocarbon such as methane, propane, butane, heptane, or hexane, or a petroleum hydrocarbon such as isooctane, gasoline, kerosene, or naphtha) or an alcohol (e.g., methanol, ethanol, n-propanol, isopropyl alcohol, and 1-butanol) may be used. A mixture of these compounds may also be used. As the reforming method, partial reforming that utilizes oxygen, steam reforming that utilizes water, autothermal reforming that utilizes oxygen and water, or the like may be used.

EXAMPLES

The present invention is further described below by way of examples. Note that the present invention is not limited to the following examples.

(Example 1)

A plasma reactor having a structure shown in FIG 1 was produced, and a hydrocarbon reforming test was conducted. A honeycomb structure produced by extruding a cordierite-forming raw material so that the cell length in the axial direction was 70 mm, the cell pitch was 1.0 mm, and the partition wall thickness was 0.4 mm, and firing the extruded material was used as the honeycomb structure 7. A catalyst component was supported on the honeycomb structure 7 to obtain a catalyst-supporting honeycomb structure. The catalyst component was supported on the honeycomb structure as follows. Specifically, an alumina fine powder (specific surface area: 107 $m^2$/g) was mixed with a ruthenium nitrate ($Ru(NO_3)_2$) solution, dried at 120°C, and fired at 550°C for three hours in air to obtain a Ru/alumina powder containing ruthenium (Ru) in an amount of 2 mass% based on alumina. After the addition of alumina sol and water to the Ru/alumina powder, the pH of the mixture was adjusted to 4.0 using a nitric acid solution to obtain catalyst slurry. The honeycomb structure was impregnated with the catalyst slurry, dried at 120°C, and fired at 550°C for one hour in a nitrogen atmosphere to obtain a catalyst-supporting honeycomb structure. The amount of Ru supported on the honeycomb structure was 0.5 g/l.

A first electrode and a second electrode were formed by screen printing using alumina for the substrate and tungsten for the metal electrode. The dimensions of the first electrode were 30×70×1 mm, and the dimensions of the second electrode were 15×70×1 mm. The second electrodes were divided into a first group and a second group. The first-group second electrodes 5a and the second-group second electrodes 5b were alternately disposed at the same spatial frequency at positions shifted by a half cycle. Six first-group second electrodes 5a and six second-group second electrodes 5b were disposed on each side of the honeycomb structure (i.e., the left side and the right side of the first electrode 3) at intervals of 2 mm.

As the pulse power supply 13, a high-voltage pulse power supply utilizing two SI thyristors (switching elements) (manufactured by NGK Insulators, Ltd.) was used so that the phase of an electrical pulse (first electrical pulse) applied between the first electrode 3 and the first-group second electrode 5a did not coincide with the phase of an electrical pulse (second electrical pulse) applied between the first electrode 3 and the second-group second electrode 5b.

In the reforming test, isooctane (i-$C_8H_{18}$) was used as a hydrocarbon. Isooctane was reformed by partial oxidation. Since i-$C_8H_{18}$ is liquid, a gas introduced into the plasma reactor was heated to 300°C in advance, and a specific amount of i-$C_8H_{18}$ was injected using a high-pressure microfeeder ("JP-H" manufactured by Furue Science K.K.) to vaporize i-$C_8H_{18}$. A model gas contained 2000 ppm of i-$C_8H_{18}$ and 8000 ppm of $O_2$ with the balance being $N_2$ gas. The space velocity (SV) of the model gas was 190,000 $h^{-1}$ with respect to the plasma generation space in the honeycomb structure. The model gas was introduced into the plasma reactor, and the amount of $H_2$ contained in the gas discharged from the plasma reactor was measured by a gas chromatography (GC) apparatus ("GC3200" manufactured by GL Sciences Inc., carrier gas: argon gas) equipped with a thermal conductivity detector (TCD). The $H_2$ yield (%) was calculated using the following expression. In order to calculate the $H_2$ yield (%), a reference gas having a known $H_2$ concentration was measured by GC in advance, and the $H_2$ concentration in the reformed gas was determined by comparison with the reference gas.

$$[0056] \; H_2 \text{ yield (\%)} = H_2 \text{ production amount (ppm)} / \text{i-}C_8H_{18} \text{ amount (ppm) in model}$$

$$\text{gas} \times 9$$

The concentrations of methane ($CH_4$) and ethane ($C_2H_6$) contained in the gas discharged from the plasma reactor were also measured ($CH_4$ and $C_2H_6$ were produced as by-products). In the measurement, helium gas was used as the GC carrier gas. A mixed reference gas ($H_2$, $CH_4$, and $C_2H_6$) having a known concentration was measured in advance, and the $CH_4$ concentration and the $C_2H_6$ concentration in the reformed gas were determined by comparison with the reference gas. The $CH_4$ concentration and the $C_2H_6$ concentration obtained in Example 1 were used as evaluation reference values (=1) for Example 2, Example 3, Comparative Example 1, and Comparative Example 2 described later.

As the conditions for the pulse power supply used to generate plasma, the repetition frequencies of the first electrical pulse and the second electrical pulse were set at 8 kHz, and the peak voltage was set at 3 kV. The first electrical pulse and the second electrical pulse were applied between the electrodes while shifting the phases of the first electrical pulse and the second electrical pulse by a half cycle. The plasma reactor was placed in an electric furnace so that the temperature inside the plasma reactor main body was adjusted to 300°C.

(Example 2)

A plasma reactor having the same configuration as that of the plasma reactor produced in Example 1 was produced, except that the catalyst component was not supported on the honeycomb structure. The reforming test was conducted using the resulting plasma reactor under the same conditions as in Example 1 to determine the $H_2$ yield (%), the $CH_4$ concentration, and the $C_2H_6$ concentration.

(Example 3)
A plasma reactor having the same configuration as that of the plasma reactor produced in Example 2 was produced, except that the second electrodes were not divided into two groups and were connected to the pulse power supply through one line. The reforming test was conducted using the resulting plasma reactor under the same conditions as in Example 1, except for applying an electrical pulse between the first electrode and each second electrode at the same phase and the same frequency, to determine the $H_2$ yield (%) , the $CH_4$ concentration, and the $C_2H_6$ concentration.

(Comparative Example 1)

A plasma reactor having a parallel-plate structure in which three tabular electrodes (i.e., one first electrode and two second electrodes) were disposed in parallel was produced. Specifically, two second tabular electrodes were disposed on either side (left side or right side) of the first electrode 3 parallel to the first electrode 3, instead of the first-group second electrodes 5a and the second-group second electrodes 5b shown in FIG 1. The distance between the electrodes was the same as that of Example 1. The dimensions of the electrodes were $25 \times 70 \times 1$ mm. The materials for the electrodes were the same as those of Example 1. The reforming test was conducted using the resulting plasma reactor under the same conditions as in Example 1 to determine the $H_2$ yield (%), the $CH_4$ concentration, and the $C_2H_6$ concentration.

(Comparative Example 2)

A plasma reactor having the same configuration as that of the plasma reactor of Comparative Example 1 was produced, except that the catalyst slurry used in Example 1 was applied to each side of a first electrode placed between two second electrodes, dried at 120°C, and fired at 550°C for one hour in a nitrogen atmosphere, and the catalyst component was then supported on the first electrode. The reforming test was conducted using the resulting plasma reactor under the same conditions as in Example 1 to determine the $H_2$ yield (%), the $CH_4$ concentration, and the $C_2H_6$ concentration. The total amount of Ru supported on the first electrode as the catalyst component was the same as the total amount of Ru supported on the honeycomb structure of Example 1.

TABLE 1

|  | Example 1 | Example 2 | Example 3 | Comparative Example 1 | Comparative Example 2 |
|---|---|---|---|---|---|
| $H_2$ yield (%) | 48 | 36 | 31 | 19 | 27 |
| $CH_4$ concentration ratio | 1 | 1.5 | 1.7 | 3.2 | 2.1 |
| $C_2H_6$ concentration ratio | 1 | 1.5 | 1.6 | 3.4 | 2.0 |

Table 1 shows the $H_2$ yield (%), the $CH_4$ concentration ratio, and the $C_2H_6$ concentration ratio of each example and comparative example. When comparing Example 1 with Example 2, the $H_2$ yield achieved in Example 1 in which i-$C_8H_{18}$ was reformed by a plasma discharge and a catalytic reaction was higher than the $H_2$ yield achieved in Example 2 in which i-$C_8H_{18}$ was reformed by only a plasma discharge. The amount of by-products such as $CH_4$ and $C_2H_6$ produced in Example 1 was smaller than that of Example 2. The above tendency was observed in Comparative Example 1 and Comparative Example 2 utilizing the parallel-plate structure. Specifically, the $H_2$ yield achieved in Comparative Example 2 in which i-$C_8H_{18}$ was reformed by a plasma discharge and a catalytic reaction was higher than the $H_2$ yield achieved in Comparative Example 1 in which i-$C_8H_{18}$ was reformed by only a plasma discharge, and the amount of by-products such as $CH_4$ and $C_2H_6$ produced in Comparative Example 2 was smaller than that of Comparative Example 1. It was confirmed from these results that hydrogen can be more efficiently produced from i-$C_8H_{18}$ by reforming i-$C_8H_{18}$ by means of a plasma discharge and a catalytic reaction.

When comparing Example 2 with Example 3, the $H_2$ yield achieved in Example 2 in which the second electrodes were divided into two groups and electrical pulses that had the same repetition frequency but differed in phase by a half cycle were applied to the second electrodes corresponding to each group was higher than the $H_2$ yield achieved in Example 3 in which an electrical pulse that had the same repetition frequency and the same phase were applied to all of the second electrodes, and the amount of by-products produced in Example 2 was smaller than that of Example 3 (i.e., a higher reactor performance was achieved in Example 2 as compared with Example 3). The $H_2$ yield achieved in Example 3 was higher than that of Comparative Example 1, and the $CH_4$ concentration ratio and the $C_2H_6$ concentration ratio achieved in Example 3 were lower than those of Comparative Example 1. Therefore, it was confirmed that the reactor structure according to the present invention can produce hydrogen more efficiently as compared with the parallel-plate structure.

When comparing Examples 1 and 2 with Comparative Examples 1 and 2, a high $H_2$ yield was achieved and production of by-products such as $CH_4$ and $C_2H_6$ was suppressed (i.e., the concentration ratio was low) in Examples 1 and 2 as compared with Comparative Examples 1 and 2. It is considered that the above phenomenon occurred because the reforming reaction of i-$C_8H_{18}$ due to plasma uniformly occurred in the reaction section in Examples 1 and 2 as compared with Comparative Examples 1 and 2. The $H_2$ yield increased when the catalyst component was supported on the reaction section. It is considered that the $H_2$ yield increased in Example 1 as compared with Comparative Example 2 because the difference in the specific surface area of the carrier (reaction section) supporting the catalyst affected the $H_2$ yield to a large extent. In Example 1, the honeycomb structure having a plurality of cells (gas passages) and having a large specific surface area was provided, and the catalyst component was supported on the honeycomb structure. Therefore, even if the amount of catalyst component is identical, the contact area of the catalyst component and the model gas is larger in Example 1 than that of Comparative Example 2 in which the catalyst component was supported on the surface of the tabular electrode. Therefore, the contribution of the combined reaction due to plasma and the catalyst increased in Example 1 as compared with Comparative Example 2 so that hydrogen was efficiently produced by the partial oxidation reaction of i-$C_8H_{18}$.

In the above-described example, a partial oxidation reaction was employed as the reforming method. Note that a high $H_2$ yield was achieved as compared with a plasma reactor having a parallel-plate structure by steam reforming utilizing water, autothermal reforming utilizing oxygen and water, and the like. Therefore, the plasma reactor according to the present invention is also suitable for these reforming methods.

The present invention can be suitably used for a plasma reactor that produces hydrogen from fuel such as a hydrocarbon compound by means of a reforming reaction.

**Claims**

1.  A plasma reactor comprising at least one honeycomb structure (7), tabular electrodes (3, 5) which sandwich the honeycomb structure (7) between them, and a pulse power supply (13) which applies an electrical pulse between the electrodes, **characterized in that** said electrodes are a first tabular electrode (3) and at least one set of plural second tabular electrodes (5) disposed parallel to each other at intervals perpendicularly to the first electrode (3), the honeycomb structure being sandwiched between the first electrode (3) and said set of second electrodes (5), and the pulse power supply (13) applying an electrical pulse between the first electrode and each of the plural second electrodes.

2.  The plasma reactor according to claim 1, wherein the honeycomb structure (7) is a catalyst-supporting honeycomb structure that supports a catalyst component.

3.  The plasma reactor according to claim 2, wherein the catalyst component is at least one element selected from a noble metal, aluminum, nickel, zirconium, titanium, cerium, cobalt, manganese, zinc, copper, tin, iron, niobium, magnesium, lanthanum, samarium, bismuth and barium.

4.  The plasma reactor according to claim 3, wherein the noble metal is at least one element selected from platinum, rhodium, palladium, ruthenium, indium, silver and gold.

5.  The plasma reactor according to any one of claims 1 to 4, wherein the honeycomb structure (7) has a cell density of 4 to 186 cells/cm$^2$.

6.  The plasma reactor according to any one of claims 1 to 5, wherein the plural second electrodes (5) are divided into two or more groups, the pulse power supply includes two or more power supply circuits, and each of the plural second electrodes (5) is connected to a corresponding power supply circuit among the two or more power supply circuits so that electrical pulses can be applied to the plural second electrodes at different timings corresponding to the two or more groups.

7.  The plasma reactor according to any one of claims 1 to 6, wherein a voltage waveform supplied from the pulse power supply is selected from the group consisting of a pulse waveform having a peak voltage of 1 kV or more and a pulse number per second of one or more, an alternating-current voltage waveform having a peak voltage of 1 kV or more and a frequency of 1 kHz or more, a direct-current waveform having a voltage of 1 kV or more, and a voltage waveform formed by superimposing two or more of these waveforms.

8.  The plasma reactor according to any one of claims 1 to 7, wherein each of the first electrode (3) and the plural second electrodes (5) includes a substrate (25) formed of an insulating ceramic and a metal electrode (27) buried in the substrate.

**Patentansprüche**

1.  Plasmareaktor, der zumindest eine Wabenstruktur (7), plattenförmige Elektroden (3, 5), welche die Wabenstruktur (7) sandwichartig einschließen, und eine Impulsspannnungsversorgung (13), die einen elektrischen Impuls zwischen den Elektroden anlegt, umfasst, **dadurch gekennzeichnet, dass** die Elektroden eine erste plattenförmige Elektrode (3) und zumindest eine Gruppe aus mehreren zweiten plattenförmigen Elektroden (5), die parallel zueinander und voneinander beabstandet orthogonal zur ersten Elektrode (3) angeordnet sind, umfasst, wobei die Wabenstruktur sandwichartig zwischen der ersten Elektrode (3) und der Gruppe von zweiten Elektroden (5) eingeschlossen ist und die Impulsspannnungsversorgung (13) einen elektrischen Impuls zwischen der ersten Elektrode und jeder der mehreren zweiten Elektroden anlegt.

2.  Plasmareaktor nach Anspruch 1, wobei die Wabenstruktur (7) eine katalysatortragende Wabenstruktur ist, die eine Katalysatorkomponente trägt.

3.  Plasmareaktor nach Anspruch 2, wobei die Katalysatorkomponente zumindest ein Element ist, das aus einem Edelmetall, Aluminium, Nickel, Zirconium, Titan, Cer, Cobalt, Mangan, Zink, Kupfer, Zinn, Eisen, Niob, Magnesium, Lanthan, Samarium, Bismut und Barium ausgewählt ist.

4.  Plasmareaktor nach Anspruch 3, wobei das Edelmetall zumindest ein Element ist, das aus Platin, Rhodium, Palladium, Ruthenium, Indium, Silber und Gold ausgewählt ist.

5.  Plasmareaktor nach einem der Ansprüche 1 bis 4, wobei die Wabenstruktur (7) eine Zelldichte von 4 bis 186 Zellen/cm$^2$ aufweist.

6.  Plasmareaktor nach einem der Ansprüche 1 bis 5, wobei die mehreren zweiten Elektroden (5) in zwei oder mehr Gruppen unterteilt sind, wobei die Impulsspannnungsversorgung zwei oder mehr Spannungsversorgungskreise umfasst und jede der mehreren zweiten Elektroden (5) mit einem entsprechenden Spannungsversorgungskreis aus den zwei oder mehr Spannungsversorgungskreisen verbunden ist, sodass zu verschiedenen Zeitpunkten, die den zwei oder mehr Gruppen entsprechen, elektrische Impulse an die mehreren zweiten Elektroden angelegt werden können.

7.  Plasmareaktor nach einem der Ansprüche 1 bis 6, wobei eine Spannungswellenform, die von der Impulsspannungsversorgung bereitgestellt wird, aus der aus einer Impulswellenform mit einer Spitzenspannung von 1 kV oder mehr und einer Impulszahl pro Sekunde von 1 oder mehr, einer Wechselstrom-Spannungswellenform mit einer Spitzenspannung von 1 kV oder mehr und einer Frequenz von 1 kHz oder mehr, einer Gleichstrom-Wellenform mit einer Spannung von 1 kV oder mehr und einer Spannungswellenform, die durch Überlagern von zwei oder mehr dieser Wellenformen erzeugt wird, bestehenden Gruppe ausgewählt ist.

8.  Plasmareaktor nach einem der Ansprüche 1 bis 7, wobei jede aus der ersten Elektrode (3) und den mehreren zweiten Elektroden (5) ein Substrat (25) umfasst, das aus einer isolierenden Keramik und einer Metallelektrode (27), die im Substrat eingeschlossen ist, gebildet ist.

**Revendications**

1.  Réacteur à plasma comprenant au moins une structure en nid d'abeilles (7), des électrodes tabulaires (3, 5) qui prennent mutuellement en sandwich la structure en nid- d'abeilles (7), et une alimentation d'impulsions (13) qui applique une impulsion électrique entre les électrodes, **caractérisé en ce que** lesdites électrodes sont une première électrode tabulaire (3) et au moins un ensemble de plusieurs secondes électrodes tabulaires (5) disposées parallèlement les unes aux autres à des intervalles, perpendiculairement à la première électrode (3), la structure en nid- d'abeilles étant prise en sandwich entre la première électrode (3) et ledit ensemble de secondes d'électrodes (5), et l'alimentation d'impulsions (13) appliquant une impulsion électrique entre la première électrode et chacune de la pluralité de secondes électrodes.

2.  Réacteur à plasma selon la revendication 1, dans lequel la structure en nid-d'abeilles (7) est une structure en nid d'abeilles prenant en charge une catalyse laquelle prend en charge un composant catalytique.

3. Réacteur à plasma selon la revendication 2, dans lequel le composant catalytique est au moins un élément sélectionné parmi un métal noble, l'aluminium, le nickel, le zirconium, le titane, le cérium, le cobalt, le manganèse, le zinc, le cuivre, l'étain, le fer, le niobium, le magnésium, le lanthane, le samarium , le bismuth et le baryum.

4. Réacteur à plasma selon la revendication 3, dans lequel le métal noble est au moins un élément sélectionné parmi le platine, le rhodium, le palladium, le ruthénium, l'indium, l'argent et l'or.

5. Réacteur à plasma selon l'une quelconque des revendications 1 à 4, dans lequel la structure en nid- d'abeilles (7) présente une densité cellulaire de 4 à 186 cellules/cm$^2$.

6. Réacteur à plasma selon l'une quelconque des revendications 1 à 5, dans lequel les électrodes de la pluralité de secondes électrodes (5) sont divisées en deux groupes ou plus, l'alimentation d'impulsions comprend deux circuits d'alimentation électrique ou plus, et chaque électrode de la pluralité de secondes électrodes (5) est connectée à un circuit d'alimentation électrique correspondant parmi les deux circuits d'alimentation électrique ou plus, de sorte que des impulsions électriques peuvent être appliquées à la pluralité de secondes électrodes à des temporisations différentes correspondant aux deux groupes ou plus.

7. Réacteur à plasma selon l'une quelconque des revendications 1 à 6, dans lequel une forme d'onde de tension fournie par l'alimentation d'impulsions est sélectionnée à partir du groupe comportant une forme d'onde d'impulsion présentant une tension de crête de 1 kV ou plus et un nombre d'impulsions par seconde égal ou supérieur à un, une forme d'onde de tension en courant alternatif présentant une tension de crête de 1 kV ou plus et une fréquence de 1 kHz ou plus, une forme d'onde en courant continu présentant une tension de 1 kV ou plus, et une forme d'onde de tension formée par la superposition de deux de ces formes d'onde ou plus.

8. Réacteur à plasma selon l'une quelconque des revendications 1 à 7, dans lequel chaque électrode de la première électrode (3) et de la pluralité de secondes électrodes (5) inclut un substrat (25) formé d'une céramique  isolante et d'une électrode métallique (27) enterrée dans le substrat.

FIG.1

FIG.2

FIG.3

GAS FLOW

FIG.4

HALF CYCLE HALF CYCLE HALF CYCLE

FIG.5

FIG.6

FIG.7

FIG.8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001314748 A
- JP 2005247638 A
- US 20040141890 A
- US 20050214181 A